# EUROPEAN PATENT SPECIFICATION

(11) **EP 3 710 189 B1**
(45) Date of publication and mention of the grant of the patent: **16.09.2026**
(21) Application number: 18826099.6
(22) Date of filing: 13.11.2018
(51) Int. Cl.: B23B 29/034

(54) **DEVICE FOR MACHINING INTERNAL CHANNELS AND RESPECTIVE METHOD OF OPERATION**
VORRICHTUNG ZUR BEARBEITUNG VON INNENKANÄLEN UND ENTSPRECHENDES VERFAHREN ZUM BETRIEB
DISPOSITIF D'USINAGE DE CANAUX INTERNES ET PROCÉDÉ DE FONCTIONNEMENT RESPECTIF

(30) Priority: 14.11.2017 PT 2017110411
(43) Date of publication of application: 23.09.2020
(73) Proprietor: Chetocorporation, S.A., 3720-070 Loureiro OAZ (PT)
(72) Inventor: TAVARES ANDRÉ, Sérgio David, 3730-220 Vale De Cambra (PT)
(74) Representative: Couto, Cláudia
(86) International application number: PCT/IB2018/058896
(87) International publication number: WO 2019/097395

(56) References cited:
- EP-B1- 2 509 748
- FR-A- 1 392 414
- FR-A- 768 670
- US-A1- 2015 273 591

## Description

### Technical field

The present application describes a device for machining internal channels and a respective method of operation.

### Prior art

The document EP 2 509 748 B1 discloses a device according to the preamble of claim 1. 1

The document US2017266731 discloses a method and apparatus for machining an internal surface of a differential case. A lathe having a turret and a pair of spindles are in electrical communication with a programmable computer. Integrally connected to the turret is a cutter gripper assembly that is selectively grippingly engageable with a cutter. A differential case is mounted horizontally within a mount assembly on a tabletop of the lathe. Once the cutter gripping assembly engages the cutter, the turret moves toward the differential case until the cutter is in a start position within the hollow portion of the case aligned with openings in a first and second tubular portion of the case and the pair of spindles. The pair of spindles then drivingly engage the cutter and the cutter machines a first and second internal machining surface as the cutter moves from a first cutting position to a second cutting position.

The document CN202155542 discloses an integrated boring cutter for roughly and finely machining a large-sized irregular part. The integrated boring cutter is characterized in that a boring cutter body is fixed on a boring cutter spindle by a boring cutter spindle fixing bolt; a spindle hole is arranged in the center of a fixed flange; a left adjustment sliding plate is fixed at the left end of the boring cutter body by a plurality of bolts; a rough machining boring head is fixed on the left adjustment sliding plate by a rough machining boring head fixing bolt; a right adjustment sliding plate is fixed at the right end of the boring cutter body by a plurality of counter sunk bolts and is provided with a dovetail groove; a movable dovetail groove adjustment sliding plate is arranged in the dovetail groove; a fine boring head is arranged on the movable dovetail groove adjustment sliding plate; and a fine adjustment button and a fine machining cutter blade are arranged on the fine boring head. With the adoption of the integrated boring cutter, the machining aperture range is wide, the rough machining efficiency is fast, the fine machining efficiency is high, the integrated boring cutter is convenient and fast to use and is low in cost, and frequent cutter replacement is avoided.

Document US2015273591A1 describes a boring tool which includes: a cutter provided on an outer peripheral portion of a tool main body; a draw bar supported to be slidable in a tool axial direction in a center hole of the tool main body; cutting edge position adjusting means for adjusting a cutting edge position of the cutter in a tool radial direction depending on a position of the draw bar in the tool axial direction; and a spring for biasing and positioning the draw bar in the tool axial direction in mounting of the tool main body on a main spindle of a machine tool.

Document FR768670A describes a device for routing bores, grooving internal circular slots, etc.

Document FR1392414A describes a tool holder for drilling and facing tools.

None of the above mentioned documents solve the problem of conferring a mechanical drilling apparatus with the capacity to machine internal channels.

### Summary

The present application describes a device for machining internal channels as defined in claim 1.

In a particular embodiment of the device, the cutting surface of the machine tool is of variable length.

In another particular embodiment of the device, the cutting surface of the cutting tool has a cylindrical geometry.

In another particular embodiment of the device, the length of the command rod is defined by the length of the cutting surface of the cutting tool.

In another particular embodiment of the device, the peripheral data input device is of the keyboard type.

In yet another particular embodiment of the device, the peripheral data output device is a screen.

This application also describes the respective method for operating the device for machining internal channels, the cited method being defined by the features of claim 7.

### General description

The present application describes a device for machining internal channels, couplable to mechanical drilling apparatus configured to generate rotational and longitudinal movement, such as machine tools for drilling, milling and turning. Using this device, it is possible to endow the cited apparatus with a capacity to machine internal channels, conferring on them a function that is not common to them.

For this purpose, the device for machining internal channels comprises a coupling structure, a control unit and a tool for machining internal channels, referred to hereafter as a cutting tool.

Moreover, a method of operating the respective device is also described, which allows the action of the cutting tool in accordance with a set of parameters programmed by an operator.

For this purpose, the developed device is installed in the mechanical apparatus, hereafter referred to as the machine tool, using the coupling structure which ensures not only the powering of said device, through the machine tool, but also allows the correct transmission of the rotational and longitudinal movements, produced thereby, to the cutting tool. In addition to the cited rotational and longitudinal movements it is also possible to configure a radial movement, which is parameterized in the control unit of the device, which, thus, commands the action of the machine tool and operates the cutting tool. The programming of the cited control unit is made through a user interface which allows its operator to configure the limits of the cutting tool and respective kinematics.

The coupling structure is responsible for the connection between the machine tool and the cutting tool, being comprised of a grip tether which, at one end, engages the machine tool and, at the opposite end, fits into a rotating interface. The latter connects to a rotation adapter which is interconnected, through docking mechanisms, to the device itself. The rotation adapter, in turn, is connected to a torque cone, which allows the coupling to the cutting tool and the correct transmission of the radial movement thereto. This mechanical transmission chain allows the operator to control the action of the rotational and longitudinal movements, generated by the machine tool, and the radial movements to be applied to the cutting tool, in accordance with the parameters programmed in the control unit of the device. As a result, it is possible to create internal channels along the part being machined - controlling the longitudinal movement of the machine tool - with a variable depth - and controlling the rotational and radial movements.

The control unit of the device is responsible, based on the parameters inserted by the operator, for activating the machine tool, in relation to the rotational and longitudinal parameters, which is to say, the forward and backwards movements, and the cutting tool, in accordance with the programmed radial parameter. For this purpose, the control unit of the device also comprises a communication module which allows the interaction with the controller of the machine tool, thus enabling access to control the operation. In turn, the control of the cutting tool is made through a physical connection between the device and the machine tool, enabled by the coupling structure, specifically through the connection between the rotation adapter and the torque cone, which allows the transmission and materialization of the control information, as programmed, to the cited tool.

The control unit establishes the interface with the user on two levels: content visualization, using the peripheral data output devices, such as a screen; and parameter programming, through the peripheral input devices of the mouse type, physical or tactile keyboard, where the screen for visualizing the data supports such technology.

The cutting tool comprises a cutting surface and an internal command rod, which engages the torque cone connected to the device through the rotation adapter. By way of illustration, the cutting surface may have a cylindrical geometry, which is referred to as the cutting cylinder head. The length of the internal rod is variable, and is related to the effective length of the said cutting head and, by extension, of the cutting tool. The cutting cylinder head comprises at least one retractable blade, inserted into its surface, which is responsible for the machining of the channel on the inside of the parts. The action of these blades is triggered by the internal rod of the tool which, through the torque cone, controls the lift degree of the blades, in accordance with the radial parameter programmed by the operator - which is to say, in accordance with the diameter desired for the internal channel. In effect, in accordance with the radial parameter, the torque cone activates the internal rod, where the longitudinal movement thereof, in a fixed displacement interval, is responsible for roughly lifting the cutting blades.

As such, the programming of the control of the device, regarding the rotational, longitudinal and radial parameters, allows the configuration of the internal channels along the parts being machined, at different depths.

As regards the operating method of the device, the following steps are executed:
- assembly of the device in the machine tool;
- aligning and fixing the part to be machined;
- parameterization of the operating parameters, in the control unit of the device:
   o programming of the rotational movement;
   o programming of the longitudinal movement
   o programming of the radial movement;
- the control unit commands the machine tool, in accordance with the programmed longitudinal and rotational movement;
- the machine tool generates the longitudinal and rotational movements, which are transmitted to the cutting tool through the coupling structure formed by the rotation adapter and the torque cone;
- the torque cone in accordance with the programmed radial movement, which activates the command rod responsible for commanding the lift degree of the retractable blades based on the programmed value.

As a result, it is possible to effectively control the process of machining an internal channel, configuring the dimensions that characterize it - depth and width, for example, through the programming of the longitudinal, rotational and radial parameters.

### Brief description of the figures

For a better comprehension of this application, figures have been attached that represent preferential embodiments which, however, are not intended to limit the technique disclosed hereby.

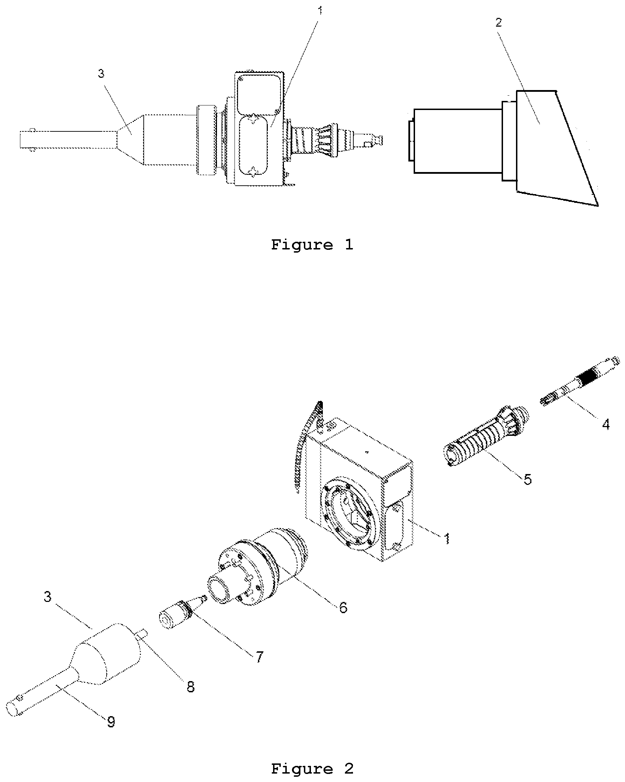

**Figure 1** represents the device for machining internal channels through machine tools, where the reference marks signify:
   1 - device;
   2 - machine tool;
   3 - cutting tool.
**Figure 2** represents an exploded view of the device for machining internal channels through machine tools, where the reference marks signify:
   1 - device;
   3 - cutting tool;
   4 - tether;
   5 - rotating interface;
   6 - rotating adapter;
   7 - torque cone;
   8 - internal rod;
   9 - cutting cylinder head.

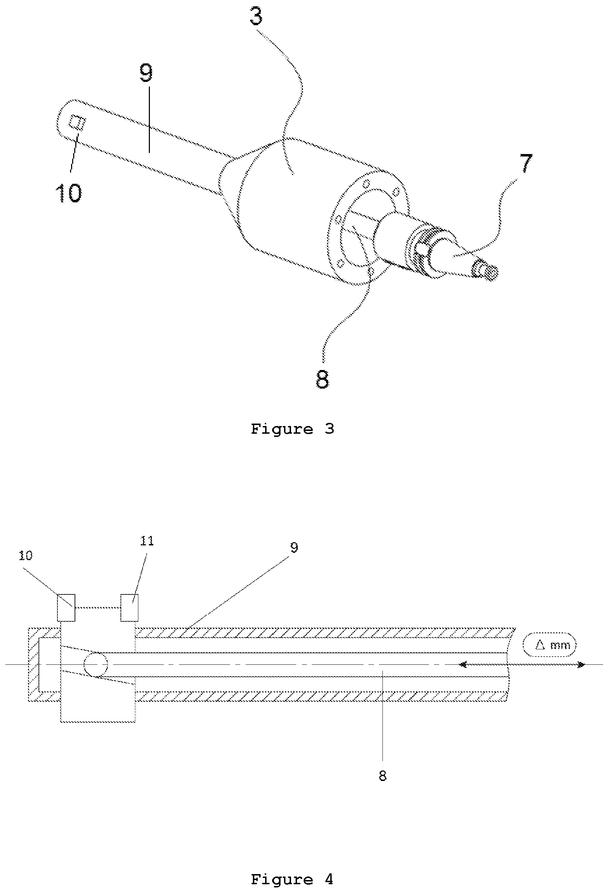

**Figure 3** represents the cutting tool, wherein the reference marks indicate:
   3 - cutting tool;
   7 - torque cone;
   8 - internal rod;
   9 - cutting cylinder head;
   10 - cutting blade.
**Figure 4** illustrates the inside of the cutting tool and the activating mechanism of the cutting blades, where the reference marks signify:
   8 - internal rod;
   9 - cylinder head;
   10 - cutting blade;
   11 - cutting blade.

### Description of embodiments

With reference to the figures, some embodiments are now described in more detail, which is not intended, however, to limit the scope of the present application.

The machine tool (2) causes the rotation of the rotating interface (5) of the coupling structure of the device (1), through the mechanical connecting chain provided by the tether (4), which is coupled to the cited machine (2). This rotation, in conjunction with the longitudinal movement of the entire structure - device (1), cutting tool (3) and machine tool (2), allows for the creation of internal channels in the parts undergoing machining. These channels may have different depths, depending on the radial parameter which, in conjunction with the two aforementioned movements, are programmed by the operator at the control unit of the device.

In a particular embodiment, the rotational movement imposed by the machine tool (2) allows a maximum of 6000 rpm and a power of 33kw. In order to allow the rotation movement to be transmitted to the cutting tool (3), in particular, its internal rod (8), is coupled to a rotation adapter (6), coupled to the rotating interface (5), which moves together with the fixing cone (7). In this particular embodiment, the cutting tool (3) comprises two cutting blades (10, 11) located in the cylinder head (9).

In order to initiate the process of machining the part that it is intended to work, the latter is placed with the cutting tool (3) by the action of longitudinal movements of the machine tool (2). Then, and with the rotational movement already initiated, the cutting tool (3) is introduced into the drill of the part to be machined, which was previously opened. In order to produce the internal channels, the controller of the device (1), after defining the necessary parameters - rotational, longitudinal and radial - which may vary depending on the specificities of each part to be machined, provokes a longitudinal movement in the rod (8) placed inside the cutting tool (3), which activates the cutting blades (10, 11) which allow the opening up of the intended channels.

In a particular embodiment, the longitudinal movement of the rod (8) can extend to a maximum of 150mm, having been previously parameterized by the controller.

This description is clearly, in no way, limited to the embodiments presented in this document and a person with average knowledge of the field could foresee many possibilities of modifying it without departing from the scope of the invention, as defined in the claims. The preferential embodiments described above are obviously combinable with each other. The dependent claims additionally define preferential embodiments.

## Claims

1. Device for machining internal channels comprising:
- a coupling structure for connection to a machine tool (2) ;
- a cutting tool (3) with a cutting surface comprising retractable blades, for machining internal channels, said cutting tool (3) being connected to the machine tool (2) through the coupling structure;
wherein
the coupling structure comprises:
- a rotation adapter (6) for connection to the machine tool (2) for transmitting the rotational movement;
- a torque cone (7) which connects to the rotation adapter (6); and
- a command rod which engages the torque cone (7) and which activates the retractable blades of the cutting tool (3) **characterised in that** the the device further comprises a control unit, comprising a communication module configured to establish the interaction with the controller of the machine tool (2) and adapted to operate the cutting tool (3), through at least one peripheral input device and at least one peripheral data output device and comprising a program, which when executed on the control unit, commands the machine tool (2) to perform programmed longitudinal and rotational movements.

2. Device according to the previous claim, wherein the cutting surface of the cutting tool (3) is of variable length.

3. Device according to any of the previous claims, wherein the cutting surface of the cutting tool (3) has a cylindrical geometry.

4. Device according to claim 3, wherein a length of the command rod is defined by the variable length of the cutting surface of the cutting tool (3).

5. Device according to claim 1, wherein the peripheral input device is of the keyboard type.

6. Device according to claim 1, wherein the peripheral data output device is a screen.

7. Method of operating the device for machining internal channels described in any of the claims 1 to 6, comprising the following steps:
- parameterization of the operation parameters, in the control unit of the device:
▪ programming of the rotational movement;
▪ programming of the longitudinal movement;
▪ programming of the radial movement;
- the control unit commands the machine tool (2), in accordance with the programmed longitudinal and rotational movement;
- the machine tool (2) generates the longitudinal and rotational movements, which are transmitted to the cutting tool (3) through the coupling structure formed by the rotation adapter (6) and the torque cone (7);
- the torque cone (7), in accordance with the programmed radial movement, which activates the command rod (8) responsible for commanding the lift degree of the retractable blades based on the programmed value.

## Patentansprüche

1. Vorrichtung zur Bearbeitung von Innenkanälen, umfassend:
- eine Kupplungsstruktur zum Anschluss an eine Werkzeugmaschine (2);
- ein Schneidwerkzeug (3) mit einer Schneidfläche, die einziehbare Schneiden umfasst, zur Bearbeitung von Innenkanälen, wobei das Schneidwerkzeug (3) über die Kupplungsstruktur mit der Werkzeugmaschine (2) verbunden ist;
wobei
die Kupplungsstruktur Folgendes umfasst:
- einen Rotationsadapter (6) zum Anschluss an die Werkzeugmaschine (2) zur Übertragung der Rotationsbewegung;
- einen Drehmomentkegel (7), der mit dem Rotationsadapter (6) verbunden ist; und
- eine Steuerstange, die in den Drehmomentkegel (7) eingreift und die einziehbaren Schneiden des Schneidwerkzeugs (3) betätigt **dadurch gekennzeichnet, dass** die Vorrichtung ferner eine Steuereinheit umfasst, die ein Kommunikationsmodul enthält, das so konfiguriert ist, dass es die Interaktion mit der Steuerung der Werkzeugmaschine (2) herstellt, und das dazu ausgelegt ist, das Schneidwerkzeug (3) über mindestens eine periphere Eingabevorrichtung und mindestens eine periphere Datenausgabevorrichtung zu betreiben, sowie ein Programm enthält, das bei seiner Ausführung auf der Steuereinheit die Werkzeugmaschine (2) ansteuert, programmierte Längs- und Rotationsbewegungen auszuführen.

2. Vorrichtung nach dem vorstehenden Anspruch, wobei die Schneidfläche des Schneidwerkzeugs (3) eine variable Länge hat.

3. Vorrichtung nach einem der vorstehenden Ansprüche, wobei die Schneidfläche des Schneidwerkzeugs (3) eine zylindrische Geometrie aufweist.

4. Vorrichtung nach Anspruch 3, wobei eine Länge der Steuerstange durch die variable Länge der Schneidfläche des Schneidwerkzeugs (3) bestimmt wird.

5. Vorrichtung nach Anspruch 1, wobei die periphere Eingabevorrichtung vom Typ einer Tastatur ist.

6. Vorrichtung nach Anspruch 1, wobei die periphere Datenausgabevorrichtung ein Bildschirm ist.

7. Verfahren zum Betreiben der in einem der Ansprüche 1 bis 6 beschriebenen Vorrichtung zur Bearbeitung von Innenkanälen, umfassend die folgenden Schritte:
- Parametrierung der Betriebsparameter in der Steuereinheit der Vorrichtung:
■ Programmierung der Rotationsbewegung;
■ Programmierung der Längsbewegung;
■ Programmierung der Radialbewegung;
- die Steuereinheit steuert die Werkzeugmaschine (2) entsprechend der programmierten Längs- und Rotationsbewegung an;
- die Werkzeugmaschine (2) erzeugt die Längs- und Rotationsbewegungen, die über die aus dem Rotationsadapter (6) und dem Drehmomentkegel (7) gebildete Kupplungsstruktur auf das Schneidwerkzeug (3) übertragen werden;
- der Drehmomentkegel (7), entsprechend der programmierten radialen Bewegung, der die Steuerstange (8) betätigt, welche für die Steuerung des Ausfahrgrads der einziehbaren Schneiden auf der Grundlage des programmierten Wertes zuständig ist.

## Revendications

1. Dispositif pour l'usinage de canaux internes comprenant :
une structure d'accouplement pour la connexion à une machine-outil (2) ;
un outil de coupe (3) avec une surface de coupe comprenant des lames rétractables, pour l'usinage de canaux internes, ledit outil de coupe (3) étant connecté à la machine-outil (2) par l'intermédiaire de la structure d'accouplement
dans lequel
la structure d'accouplement comprend :
un adaptateur de rotation (6) pour la connexion à la machine-outil (2) pour transmettre le mouvement de rotation ;
un cône de couple (7) qui se connecte à l'adaptateur de rotation (6) ; et
une tige de commande qui vient en prise avec le cône de couple (7) et qui active les lames rétractables de l'outil de coupe (3) **caractérisé en ce que** le dispositif comprend en outre une unité de commande, comprenant un module de communication configuré pour établir l'interaction avec le contrôleur de la machine-outil (2) et adapté pour actionner l'outil de coupe (3), par l'intermédiaire d'au moins un dispositif d'entrée périphérique et au moins un dispositif de sortie de données périphérique et comprenant un programme qui, lorsqu'il est exécuté sur l'unité de commande, commande à la machine-outil (2) d'effectuer des mouvements longitudinaux et de rotation programmés.

2. Dispositif selon la revendication précédente, dans lequel la surface de coupe de l'outil de coupe (3) est de longueur variable.

3. Dispositif selon l'une quelconque des revendications précédentes, dans lequel la surface de coupe de l'outil de coupe (3) présente une géométrie cylindrique.

4. Dispositif selon la revendication 3, dans lequel une longueur de la tige de commande est définie par la longueur variable de la surface de coupe de l'outil de coupe (3).

5. Dispositif selon la revendication 1, dans lequel le dispositif d'entrée périphérique est du type clavier.

6. Dispositif selon la revendication 1, dans lequel le dispositif de sortie de données périphérique est un écran.

7. Procédé de fonctionnement du dispositif pour l'usinage de canaux internes selon l'une quelconque des revendications 1 à 6, dans lequel il comprend les étapes suivantes :
le paramétrage des paramètres de fonctionnement, dans l'unité de commande du dispositif :
la programmation du mouvement de rotation ;
la programmation du mouvement longitudinal ;
la programmation du mouvement radial ;
l'unité de commande commande la machine-outil (2), conformément au mouvement longitudinal et de rotation programmé ;
la machine-outil (2) génère les mouvements longitudinaux et de rotation, qui sont transmis à l'outil de coupe (3) par l'intermédiaire de la structure d'accouplement formée par l'adaptateur de rotation (6) et le cône de couple (7) ;
le cône de couple (7), conformément au mouvement radial programmé, qui active la tige de commande (8) responsable de commander le degré de levée des lames rétractables en fonction de la valeur programmée.
